(19) Europäisches Patentamt
European Patent Office
Office européen des brevets

(11) EP 1 902 865 A1

(12) EUROPEAN PATENT APPLICATION

(43) Date of publication:
26.03.2008 Bulletin 2008/13

(21) Application number: 07116622.7

(22) Date of filing: 18.09.2007

(51) Int Cl.:
B60C 1/00 (2006.01) C08K 3/36 (2006.01)
C08L 9/00 (2006.01) C08L 21/00 (2006.01)

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK YU

(30) Priority: 21.09.2006 US 524634
05.10.2006 US 543552

(71) Applicant: THE GOODYEAR TIRE & RUBBER COMPANY
Akron, OH 44316-0001 (US)

(72) Inventors:
- Kanz, Carlo
L-8249 Mamer (LU)
- Kaes, Christian
L-9184 Schrondweiler (LU)
- Frank, Uwe Ernst
D-66606 St. Wendel (DE)

(74) Representative: Kutsch, Bernd
Goodyear S.A.,
Patent Department,
Avenue Gordon Smith
7750 Colmar-Berg (LU)

# (54) Pneumatic tire

(57) The present invention is directed to a pneumatic tire having a rubber component including
(A) 100 parts by weight (phr) of a rubber containing olefinic unsaturation;
(B) from 50 to 120 phr of silica;
(C) from 1 to 40 phr of a polyoctenamer.



Printed by Jouve, 75001 PARIS (FR)

## Description

### Background of the Invention

US-B- 5,395,891 discloses rubber mixtures containing a polybutadiene gel. The rubber mixtures are disclosed for use in the tread of a pneumatic tire.

US-B- 6,127,488 discloses rubber mixtures prepared from at least one styrene butadiene rubber gel, and at least one rubber which contains double bonds.

US-B- 5,672,639 discloses rubber compositions containing a starch/plasticizer composite. The rubber composition is disclosed for used in the tread or other components of a pneumatic tire.

US-B- 6,184,296 discloses rubber mixtures containing rubber gel modified with compounds containing sulfur and reaction toward carbon-carbon double bonds, and at least one rubber containing double bonds.

US-B- 6,242,534; 6,207,757; 6,372,857; 6,133,364 disclose rubber mixtures containing at least one rubber component, and at least one rubber gel as a filler.

US-B- 5,430,084 discloses a rubber composition and tire comprising from about 10 to 25 weight percent of a preblended silica and polyoctenamer.

### Summary of the Invention

The present invention is directed to a pneumatic tire according to claim 1 and to a method according to claim 10.

Dependent claims refer to preferred embodiments of the invention.

### Detailed Description of the Invention

There is disclosed a pneumatic tire having a rubber component comprising

(A) 100 parts by weight (phr) of a rubber containing olefinic unsaturation;
(B) from 50 to 100 phr, alternately from 70 to 90 phr, of silica; and
(C) from 1 to 40 phr, alternately from 5 to 30 phr, of a polyoctenamer.

A suitable polyoctenamer includes cyclic or linear macromolecules based on cyclooctene, or a mixture of such cyclic and linear macromolecules. One suitable polyoctenamer is commercially available as Vestenamer 8012 or V6213 from Degussa AG High Performance Polymers. Vestenamer is a polyoctenamer produced in a methathesis reaction of cyclooctene. In one embodiment, the octenamer may have a weight averaged molecular weight of 90,000 to 110,000; a glass transition temperature of from -65˚C to -75˚C; a crystalline content of from 10 to 30 percent by weight; a melting point of from 36˚C to 54˚C; a thermal decomposition temperature of from 250˚C to 275˚C; a cis/trans ratio of double bonds of from 20:80 to 40:60; and Mooney viscosity ML 1 +4 of less than 10.

In one embodiment, polyoctenamer is added in an amount ranging from 1 to 40 percent by weight of the total rubber or elastomer used in the rubber composition. Alternatively, from 5 phr to 30 phr polyoctenamer is added to the rubber composition.

In one aspect of the invention, the rubber component of the tire further comprises from 1 to 30 phr, alternately from 5 to 20 phr, of a rubber gel selected from the group consisting of polybutadiene gel, styrene butadiene gel, acrylonitrile-butadiene gel, chloroprene gel, natural rubber gel, and mixtures thereof.

The term "rubber gel" is used herein to describe polybutadiene gel, styrene butadiene gel, acrylonitrile-butadiene gel, chloroprene gel and natural rubber gel. The preferred gels are polybutadiene gel and styrene butadiene gel. Suitable gels are described in and may be produced by methods as are taught in US-B- 5,395,891; US-B-6,127,488; US-B-6,184,296; US-B- 6,242,534; US-B-6,207,757; US-B- 6,372,857; and US-B- 6,133,364.

Representative styrene butadiene gels which may be used for use in the present invention are described in US-B- 6,127,488.

The rubber gels also include such polymeric copolymers grafted with polar unsaturated monomers such as acrylic acid, methacrylic acid, acrylamide, methacrylamide, N-methoxymethyl methacrylic acid amide, N-methoxymethyl methacrylic acid amide, N-acetoxymethyl methacrylic acid amide, acrylonitrile, dimethyl acrylamide, hydroxyethyl acrylate, hydroxyethyl methacrylate, hydroxypropyl acrylate, hydroxypropyl methacrylate, hydroxybutyl acrylate, hydroxybutyl methacrylate and mixtures thereof. The grafted rubber gel may have from 1 to 20 weight percent of its makeup derived from the polar monomers.

The rubber gels have particle diameters of from 20 to 1000, preferably 30 to 400 nm (DVN value to DIN 53 206) and/or swelling indices ($Q_i$) in toluene of from 1 to 15, preferably 1 to 10. The swelling index is calculated from the weight of the gel when it contains solvent (following centrifuging at 20,000 rpm) and its weight when dry:

$$Q_i = \text{wet weight of gel/dry weight of gel}$$

As an example of determining the swelling index, 250 mg of SBR gel is swelled in 25 ml toluene for 24 hours, with shaking. The gel is centrifuged off and weighed, and is then dried at 70°C until the weight is constant, and is reweighed.
The stryene butadiene rubber starting products are preferably prepared by emulsion polymerization. In this connection see, for example, I. Franta, Elastomers and Rubber Compounding Materials, Elsevier, Amsterdam 1989, Pages 88 to 92.
The styrene butadiene rubber gels are intended to include microgels which are prepared by cross-linking styrene butadiene copolymer which contain from 1 to 80 percent by weight styrene and 99 to 20 percent by weight butadiene. Preferably from 5 to 50 weight percent of the SBR is derived from styrene and the balance being derived from butadiene.
The cross-linking of the rubber starting products to form styrene butadiene rubber gels takes place in the latex state. This may be during polymerization, as a result of continuing the polymerization to high conversions, or in the monomer feeding process as a result of polymerization at high internal conversions, or as a result of post-cross-linking after polymerization, or both processes may be combined. The rubber starting products may also be prepared by polymerization in the absence of regulators.
The styrene butadiene rubber and polybutadiene rubber may also be cross-linked by copolymerization with multifunctional compounds having a cross-linking action. Preferred multifunctional comonomers are compounds having at least two, preferably 2 to 4, copolymerizable C=C double bonds, such as diisopropenylbenzene, divinylbenzene, divinylether, divinylsulphone, diallyl phthalate, triallyl cyanurate, triallyl isocyanurate, 1,2-polybutadiene, N,N'-m-phenylene maleic imide and/or triallyl trimellitate. The following are furthermore considered: acrylates and methacrylates of polyvalent, preferably divalent to tetravalent, $C_2$-$C_{10}$ alcohols, such as ethylene glycol, propanediol-1,2, butanediol, hexanediol, polyethylene glycol, having 2 to 20, preferably 2 to 8 oxyethylene units, neopentyl glycol, bisphenol A, glycerol, trimethylol propane, pentaerythritol, sorbitol and unsaturated polyesters prepared from aliphatic diols and polyols and maleic acid, fumaric acid and/or itaconic acid.
The styrene butadiene rubbers, as well as the natural rubber, polybutadiene rubber, NBR and chloroprene rubber, may also be cross-linked in the latex form to form rubbers gels, as a result of post-cross-linking them with chemicals having a cross-linking action. Suitable chemicals having a cross-linking action are, for example, organic peroxides, for example, dicumyl peroxide, t-butylcumyl peroxide, bis-(t-butyl-peroxyisopropyl) benzene, di-t-butyl peroxide, dibenzoyl peroxide, bis-(2,4-dichlorobenzoyl) peroxide, t-butyl perbenzoate, and organic azo compounds such as azo-bis-isobutyronitrile and azo-bis-cyclohexanenitrile, and dimercapto and polymercapto compounds such as dimercaptoethane, 1,6-dimercaptohexane, 1,3,5-trimercaptotriazine and mercapto-terminating polysulphide rubbers such as mercapto-terminating reaction products of bis-chloroethyl formal with sodium polysulphide. The optimal temperature for the post-cross-linking operation is naturally dependent on the reactivity of the cross-linking agent and may be from room temperature up to approximately 170C, optionally at elevated pressure. See in this context Houben-Weyl, Methoden der organischen Chemic [Methods in Organic Chemistry], 4th Edition, Volume 14/2, Page 848. Peroxides are particularly preferred cross-linking agents.
It is also optionally possible to enlarge the particles by agglomeration before, during, or after the post-cross-linking in latex form.
Styrene butadiene rubbers, as well as the other rubbers which have been prepared in organic solvents, may also serve as starting products for the preparation of the respective rubber gels. In this case, it is advisable to emulsify the rubber solution in water, optionally with the aid of an emulsifying agent, and to follow this, either before or after removing the organic solvent, with cross-linking of the emulsion thus obtained using suitable cross-linking agents. The cross-linking agents previously named are suitable cross-linking agents.
The polybutadiene gel may be produced by emulsion polymerization (see, for example, M. Morton, P. P. Salatiello, H. Landfield, J. Polymer Science 8,2 (1952), Pages 215 through 224; P. A. Weerts, J. L. M. van der Loos, A. L. German, Makromol. Chem. 190 (1989), Pages 777 through 788).
The size of the latex particles (DVN value according to DIN 53 2016) is preferably 30 to 500 nm.
Production by polymerization in the absence of regulators is also possible.
The rubber component contains a rubber containing olefinic unsaturation. The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials. Representative synthetic polymers are the homopolymerization products of butadiene and its homologues and derivatives, for example, methylbutadiene, dimethylbutadiene and pentadiene as well as copolymers such as those

formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include a carboxylated rubber, silicon-coupled and tin-coupled star-branched polymers. The preferred rubber or elastomers are polybutadiene and SBR.

In one aspect, the rubber may be a blend of at least two diene based rubbers. For example, a blend of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene butadiene rubbers, cis 1,4-polybutadiene rubbers and emulsion polymerization prepared butadiene/acrylonitrile copolymers.

In one aspect of this invention, an emulsion polymerization derived styrene butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

When used in the tire tread, the relatively high styrene content of 30 to 45 for the E-SBR can be considered beneficial for a purpose of enhancing traction, or skid resistance. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

A purpose of using S-SBR is for improved tire rolling resistance as a result of lower hysteresis when it is used in a tire tread composition.

The 3,4-polyisoprene rubber (3,4-PI) is considered beneficial for a purpose of enhancing the tire's traction when it is used in a tire tread composition. The 3,4-PI and use thereof is more fully described in US-B-5,087,668.

The cis 1,4-polybutadiene rubber (BR) is considered to be beneficial for a purpose of enhancing the tire tread's wear, or treadwear. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

In addition to the polyoctenamer and rubber containing olefinic unsaturation in the rubber component of the tire, silica is present. The amount of silica may range from 50 to 120 phr. Preferably, the silica is present in an amount ranging from 60 to 100 phr. Alternatively, the silica is present is an amount ranging from 70 to 90 phr.

The commonly-employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Various commercially available silicas may be used, such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc.

Commonly employed carbon blacks can be used as a conventional filler in an amount ranging from 0 to 50 phr, alternately 10 to 30 phr. Representative examples of such carbon blacks include N110, N115, N121, N134, N220, N231, N234, N242, N293, N299, S315, N326, N330, M332, N339, N343, N347, N351, N358, N375, N539, N550, N582, N630, N642, N650, N660, N683, N754, N762, N765, N774, N787, N907, N908, N990 and N991. These carbon blacks have iodine absorptions ranging from 9 to 170 g/kg and DBP No. ranging from 34 to 150 $cm^3$/100 g.

It may be preferred to have the rubber composition for use in the tire component to additionally contain 0.5 to

20 phr of a sulfur containing organosilicon compound. Examples of suitable sulfur containing organosilicon compounds are of the formula:

Z-Alk-$S_n$-Alk-Z

in which Z is selected from the group consisting of

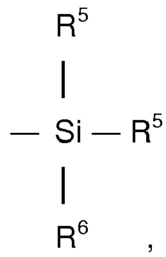
,
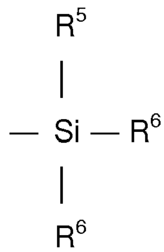
and
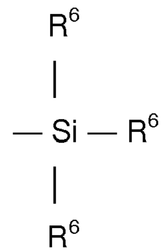

where $R^5$ is an alkyl group of 1 to 4 carbon atoms, cyclohexyl or phenyl; $R^6$ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore as to the above formula, preferably Z is

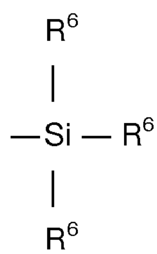

where $R^6$ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

The amount of the sulfur containing organosilicon compound of the above formula in a rubber composition will vary depending on the level of other additives that are used. Generally speaking, the amount of the compound of the above formula will range from 0.5 to 20 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage (s). The rubber and compound is mixed in one or more non-productive mix stages. If the rubber composition contains a sulfur containing organosilicon compound, one may subject the rubber composition to a thermomechanical mixing step. The thermomechanical mixing step generally comprises a mechanical working in a mixer or extruder for a period of time suitable in order to produce a rubber temperature between 140˚C and 190˚C. The appropriate duration of the

thermomechanical working varies as a function of the operating conditions and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat, innerliner, and ply coat. Preferably, the compound is a sidewall insert or a tread cap or tread base.

The pneumatic tire of the present invention may be a passenger tire, motorcycle tire, aircraft tire, agricultural, earthmover, off-the-road, truck tire and the like. Preferably, the tire is a passenger or truck tire.

Vulcanization of the pneumatic tire of the present invention is generally carried out at conventional temperatures ranging from 100˚C to 200˚C.

Any of the usual vulcanization processes may be used such as heating in a press or mold, heating with superheated steam or hot air.

**Example 1**

In this Example, a polyoctenamer was evaluated in a rubber composition.

Rubber compositions containing the materials set out in Table 1 was prepared using multiple stages of addition (mixing); at least one non-productive mix stage and a productive mix stage. The non-productive stages were mixed for two minutes at a rubber temperature of 160˚C. The drop temperature for the productive mix stage was 115˚C.

The rubber compositions are identified as Sample 1 through Sample 5. The Samples were cured at 160˚C for 14 minutes. Table 2 illustrates the physical properties of the cured Samples 1 through 5. Samples were tested according to the following protocols:

Zwick Rebound : ASTM D1054, DIN 53512
RPA 2000 : ASTM D5289
MV2000 Plasticity : ASTM D1646, DIN 53523
Drum Abrasion : ASTM D5963, DIN 53516
MDR 2000 : ASTM D2084 , D5289

**Table 1**

| Rubber Compound Recipe (amounts in phr) | |
|---|---|
| **Non-Productive Mix** | |
| SBR[1] | 30 |
| SBR[2] | 50 |
| Cis-1,4 polybutadiene[3] | 20 |
| Silica[4] | 80 |
| Coupling Agent[5] | 10 |
| Stearic Acid | 3 |
| **Productive Mix** | |
| Zinc Oxide | 2.5 |
| Accelerators[6] | 2 |
| Antioxidant[7] | 2 |
| Sulfur | 2 |

(continued)

| **Productive Mix** | |
|---|---|
| Polyoctenamer[8] | variable as per Table 2 |
| [1]Solution polymerized styrene-butadiene rubber as SLF30H41 from The Goodyear Tire & Rubber Company<br>[2]Solution polymerized styrene-butadiene rubber as SLF31X22 from The Goodyear Tire & Rubber Company<br>[3]Budene 1207 from The Goodyear Tire & Rubber Company<br>[4]Zeosil 1165 MP from Rhone Poulenc Company<br>[5]50% organosilicon sulfide type on carbon black carrier<br>[6]sulfenamide and thiuram type<br>[7]dihydrotrimethyl quinoline type<br>[8]Vestenamer 8012 from Degussa GmbH | |

**Table 2**

| **Samples** | **1** | **2** | **3** | **4** | **5** |
|---|---|---|---|---|---|
| Polyoctenamer, phr | 0 | 5 | 10 | 20 | 30 |
| Mooney viscosity (ML 1+1.5 @100C) | 50.1 | 47.6 | 46.6 | 41.2 | 36.3 |
| **RPA2000 100 C (191 C @1.67 Hz)** | | | | | |
| G' (15%) Green, MPa | 0.254 | 0.245 | 0.249 | 0.233 | 0.217 |
| G' (1%), MPa | 2.175 | 2.502 | 2.486 | 2.237 | 2.045 |
| G'(15%), MPa | 1.519 | 1.457 | 1.470 | 1.385 | 1.329 |
| G'(50%), MPa | 0.997 | 0.966 | 0.976 | 0.934 | 0.916 |
| G"(10%), MPa | 0.226 | 0.208 | 0.208 | 0.190 | 0.174 |
| Tan del (10%) | 0.131 | 0.127 | 0.126 | 0.124 | 0.120 |
| **MDR2000 Light Tire (150 C)** | | | | | |
| Maximum, dN-m | 17.8 | 17.4 | 17.4 | 16.8 | 16.6 |
| Amount, dN-m | 14.7 | 14.5 | 14.4 | 14 | 14 |
| Scorch 1, minutes | 3.7 | .37 | 4.1 | 4.5 | 4.9 |
| T25, minutes | 6.1 | 6.3 | 6.6 | 7.2 | 7.6 |
| T90, minutes | 15.1 | 15.9 | 17.2 | 19.2 | 20.7 |
| **Tensile** | | | | | |
| Elongation at Break, % | 401 | 414 | 429 | 456 | 486 |
| Ratio modulus | 5.2 | 5.2 | 4.8 | 4.4 | 3.9 |
| 100% modulus, MPa | 2.5 | 2.5 | 2.6 | 2.7 | 2.9 |
| 300% modulus, MPa | 12.8 | 12.7 | 12.3 | 11.7 | 11.2 |

(continued)

| Tensile | | | | | |
|---|---|---|---|---|---|
| Rebound, % | 28 | 30 | 31 | 33 | 36 |
| Shore A | 67 | 66 | 68 | 70 | 71 |
| Tensile Strength, MPa | 16.3 | 16.9 | 17.1 | 17 | 17.7 |
| **MV2000 Scorch** | | | | | |
| T+5, minutes | 29.4 | 31.2 | 33.0 | 37.2 | 40.5 |
| T+20, minutes | 37.2 | 39.2 | 40.7 | 45.4 | 49.2 |
| Zwick Rebound (100 C), % | 60 | 60 | 60 | 60 | 60 |
| **Rotary Drum Abrasion** | | | | | |
| Loss specimens, $mm^3$ | 124.3 | 109.7 | 102.3 | 89.7 | 81 |
| Loss standards, mg | 189 | 189 | 186 | 186 | 186 |
| Relative volume loss, $mm^3$ | 108.9 | 96.5 | 92.2 | 81.5 | 74.5 |

It can be seen from Table 2 that an advantageous balance of physical properties is obtained in rubber compositions comprising the polyoctenamer. In particular, the abrasion resistance for compounds containing the polyoctenamer were greatly improved compared to the control.

## Example 2

In this Example, a rubber gel and a polyoctenamer were evaluated in a rubber composition. In addition, some compositions included an SBR gel.

Rubber compositions containing the materials set out in Table 3 was prepared using three separate stages of addition (mixing); namely two non-productive mix stages and one productive mix stage. The non-productive stages were mixed for two minutes at a rubber temperature of 160˚C. The drop temperature for the productive mix stage was 115˚C.

The rubber compositions are identified as Sample 6 through Sample 9. The Samples were cured at 160˚C for 14 minutes. Table 4 illustrates the physical properties of the cured Samples 6 through 9.

**Table 3**

| Samples | 6 | 7 | 8 | 9 |
|---|---|---|---|---|
| **First Non-Productive Mix** | | | | |
| Cis-1,4 polybutadiene[1] | 25 | 25 | 25 | 25 |
| SBR[2] | 75 | 75 | 75 | 75 |
| Wax | 2 | 2 | 2 | 2 |
| Stearic Acid | 3 | 3 | 3 | 3 |
| Silica | 80 | 80 | 80 | 80 |
| Coupling Agent[3] | 6.4 | 6.4 | 6.4 | 6.4 |
| Antidegradant[4] | 1 | 1 | 1 | 1 |
| Polyoctenamer[5] | 0 | 0 | 10 | 10 |
| SBR Gel[6] | 0 | 10 | 10 | 10 |
| **Productive Mix** | | | | |
| Zinc Oxide | 2.5 | 2.5 | 2.5 | 2.5 |
| Sulfur | 1.7 | 1.7 | 1.7 | 1.7 |

(continued)

| Productive Mix | | | | |
|---|---|---|---|---|
| Accelerators[7] | 4 | 4 | 4 | 4 |
| Antidegradants[4] | 0.5 | 0.5 | 0.5 | 0.5 |

[1]Budene 1207 from The Goodyear Tire & Rubber Company
[2]Solution polymerized SBR extended with 37.5 phr aromatic oil
[3]Organosilicon sulfide type
[4]Phenylenediamine type
[5]Vestenamer 8012
[6]SBR gel, 47% styrene, cured with 1.5 phr of TMPTMA, with an average diameter of 50 nm, $T_g$ of -15 C, gel content 87 wt %, and $Q_i$=8.1. Surface treatment 7.5% hydroxyethyl methacrylate (HEMA).
[7]sulfenamide and guanidine type

**Table 4**

| Samples | 6 | 7 | 8 | 9 |
|---|---|---|---|---|
| **Mooney viscosity** | | | | |
| (ML 1+1.5 @ 1000˚C) | 80.3 | 76.6 | 66.2 | 67 |
| **RPA2000 100 C (191 ˚C @ 1.67 Hz)** | | | | |
| G' (1%), MPa | 2.593 | 2.253 | 1.844 | 1.817 |
| G'(10%), MPa | 1.931 | 1.746 | 1.511 | 1.514 |
| G'(50%), MPa | 1.164 | 1.127 | 1.029 | 1.034 |
| Tan delta (10%) | 0.085 | 0.078 | 0.074 | 0.068 |
| **Ring Modulus 23˚C** | | | | |
| Elongation at Break, % | 392 | 406 | 409 | 418 |
| True Tensile | 79.8 | 87.7 | 80.6 | 86.9 |
| 100% modulus, MPa | 2.353 | 2.323 | 2.277 | 2.393 |
| 300% modulus, MPa | 12.83 | 12.98 | 11.69 | 12.12 |
| Modulus ratio | 5.46 | 25.3 | 23.6 | 25.8 |
| Specific Energy, MPa | 23 | 25.3 | 23.6 | 25.8 |
| Tensile Strength, MPa | 16.2 | 17.3 | 15.8 | 16.8 |
| **Rebound (0˚C), %** | 13.8 | 12.9 | 14.7 | 14.7 |
| **DIN abrasion, $mm^3$** | 105.4 | 107.5 | 89.2 | 83 |

It can be seen from Table 4 that an advantageous balance of physical properties is obtained in rubber compositions comprising the polyoctenamer and the gel (Samples 8 and 9). In particular, the abrasion resistance for compounds containing the polyoctenamer and the gel were greatly improved compared to the control. The hysteretic properties found with the tan delta RPA2000 is also improved (lower) for the rubbers containing polyoctenamer and gel.

**Claims**

**1.** A pneumatic tire having a rubber component comprising:

(A) 100 parts by weight (phr) of a rubber containing olefinic unsaturation;
(B) from 50 to 120 phr of silica; and
(C) from 1 to 40 phr of a polyoctenamer.

2. The pneumatic tire of claim 1 wherein said rubber is selected from the group consisting of natural rubber, neoprene, polyisoprene, butyl rubber, halobutyl rubber, polybutadiene, styrene butadiene copolymer, styrene/isoprene/butadiene rubber, methyl methacrylate-butadiene copolymer, isoprene-styrene copolymer, methyl methacrylate-isoprene copolymer, acrylonitrile-isoprene copolymer, acrylonitrile-butadiene copolymer, carboxylated rubber, EPDM, silicon-coupled star-branched polymers, tin-coupled star-branched polymers and mixtures thereof.

3. The pneumatic tire of at least one of the previous claims, further comprising from 1 to 30 phr, alternately 5 to 20 phr, of a rubber gel selected from the group consisting of polybutadiene gel, styrene butadiene gel, acrylonitrile-butadiene gel, chloroprene gel, natural rubber gel, and mixtures thereof.

4. The pneumatic tire of claim 3, wherein the rubber gel has a particle diameter of from 20 to 1000 nm and/or a swelling index (Qi) in toluene of from 1 to 15.

5. The pneumatic tire of claims 3 or 4 wherein said rubber gel is a polybutadiene gel or wherein said rubber gel is a styrene butadiene gel.

6. The pneumatic tire of at least one of the claims 3-5 wherein said rubber gel is grafted with a polar unsaturated monomer.

7. The pneumatic tire of claim 6 wherein said polar unsaturated monomer is selected from the group consisting of acrylic acid, methacrylic acid, acrylamide, methacrylamide, N-methoxymethyl methacrylic acid amide, N-acetoxxymethyl methacrylic acid amide, acrylonitrile, dimethyl acrylamide, hydroxyethyl acrylate, hydroxyethyl methacrylate, hydroxypropyl acrylate, hydroxypropyl methacrylate, hydroxybutyl acrylate, hydroxybutyl methacrylate.

8. The pneumatic tire of at least one of the claims 3-7 wherein from 1 to 20 weight percent of said rubber gel is derived from said polar unsaturated monomer.

9. A method of preparing a rubber composition comprising:

(A) 100 parts by weight (phr) of a rubber containing olefinic unsaturation;
(B) from 50 to 120 phr of silica; and
(C) from 1 to 40 phr of a polyoctenamer;

wherein in a first, non-productive mixing step said rubber and said silica are mixed, and wherein in a second, productive mixing step, said polyoctenamer is added; or wherein in a first, non-productive mixing step said rubber, said silica, said polyoctenamer and 1 to 30 phr of a rubber gel selected from the group consisting of polybutadiene gel, styrene butadiene gel, acrylonitrile-butadiene gel, chloroprene gel, natural rubber gel, and mixtures thereof are mixed, and wherein said non-productive mixing step is followed by a second, productive mixing step.

10. The method of claim 9 wherein said composition is thermomechanically mixed at a rubber temperature in a range of from 140˚C to 190˚C for a total mixing time of from 1 to 20 minutes.

European Patent Office

# EUROPEAN SEARCH REPORT

Application Number
EP 07 11 6622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 03/009989 A (PIRELLI [IT]; CARETTA RENATO [IT]; GALIMBERTI MAURIZIO [IT]; AMURRI CE) 6 February 2003 (2003-02-06)<br>* page 11, lines 13-36; example 2; tables 1,4 *<br>* page 15, lines 12-14 * | 1-10 | INV.<br>B60C1/00<br>C08K3/36<br>C08L9/00<br>C08L21/00 |
| Y | EP 0 575 801 A (GOODYEAR TIRE & RUBBER [US]) 29 December 1993 (1993-12-29)<br>* page 3, lines 36-43; claims 1-6; examples B,C * | 1,2,9,10 | |
| Y | WO 02/102566 A (PIRELLI [IT]; VILLANI CLAUDIO [IT]; MIGLIARINI LUIGI [IT]; MISANI PIER) 27 December 2002 (2002-12-27)<br>* page 10, lines 20-38; claims 1-15; examples 3,4 *<br>* page 11, line 28 * | 1,2,9,10 | |
| Y | US 4 898 223 A (BOTZMAN THOMAS JOSEPH [US] ET AL) 6 February 1990 (1990-02-06)<br>* column 3, line 56 - column 4, line 9; claims 1-12; examples 1,2 * | 1,2,9,10 | **TECHNICAL FIELDS SEARCHED (IPC)**<br>B60C<br>C08K<br>C08L |
| Y | EP 1 431 075 A (GOODYEAR TIRE & RUBBER [US]) 23 June 2004 (2004-06-23)<br>* claims 1-6,8-10; examples 1-5 * | 3-8 | |
| Y | EP 1 241 219 A (GOODYEAR TIRE & RUBBER [US]) 18 September 2002 (2002-09-18)<br>* claims 1-10; examples C,D,E * | 3-8 | |
| A | DE 195 03 779 A1 (HUELS CHEMISCHE WERKE AG [DE] DEGUSSA [DE])<br>8 August 1996 (1996-08-08)<br>* claim 1; example B * | 1-10 | |

-/--

The present search report has been drawn up for all claims

| Place of search | Date of completion of the search | Examiner |
|---|---|---|
| Munich | 11 February 2008 | Adams, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

6

European Patent Office

# EUROPEAN SEARCH REPORT

Application Number
EP 07 11 6622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2004/013198 A (CALIFORNIA INST OF TECHN [US]) 12 February 2004 (2004-02-12)<br>* the whole document *<br>----- | 1-10 | |

TECHNICAL FIELDS SEARCHED (IPC)

The present search report has been drawn up for all claims

| Place of search | Date of completion of the search | Examiner |
|---|---|---|
| Munich | 11 February 2008 | Adams, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

6

EPO FORM 1503 03.82 (P04C01)

## ANNEX TO THE EUROPEAN SEARCH REPORT ON EUROPEAN PATENT APPLICATION NO.

EP 07 11 6622

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2008

| Patent document cited in search report | Publication date | Patent family member(s) | Publication date |
|---|---|---|---|
| WO 03009989 A | 06-02-2003 | JP 2004535319 T | 25-11-2004 |
| EP 0575801 A | 29-12-1993 | CA 2076184 A1 | 16-12-1993 |
| | | DE 69313037 D1 | 18-09-1997 |
| | | DE 69313037 T2 | 15-01-1998 |
| | | ES 2106919 T3 | 16-11-1997 |
| | | US 5430084 A | 04-07-1995 |
| WO 02102566 A | 27-12-2002 | BR 0210300 A | 13-07-2004 |
| | | JP 2004529015 T | 24-09-2004 |
| US 4898223 A | 06-02-1990 | CA 2005097 A1 | 30-07-1990 |
| | | DE 69001263 D1 | 13-05-1993 |
| | | DE 69001263 T2 | 21-10-1993 |
| | | EP 0381611 A1 | 08-08-1990 |
| | | JP 2233736 A | 17-09-1990 |
| | | JP 2807303 B2 | 08-10-1998 |
| EP 1431075 A | 23-06-2004 | US 2004122134 A1 | 24-06-2004 |
| EP 1241219 A | 18-09-2002 | BR 0200638 A | 10-12-2002 |
| | | DE 60204072 D1 | 16-06-2005 |
| | | DE 60204072 T2 | 02-02-2006 |
| DE 19503779 A1 | 08-08-1996 | EP 0728797 A1 | 28-08-1996 |
| WO 2004013198 A | 12-02-2004 | AU 2003258013 A1 | 23-02-2004 |
| | | EP 1543043 A2 | 22-06-2005 |
| | | JP 2005534777 T | 17-11-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5395891 B
- US 6127488 B
- US 5672639 B
- US 6184296 B
- US 6242534 B
- US 6207757 B
- US 6372857 B
- US 6133364 B
- US 5430084 B
- US 5087668 B


### Non-patent literature cited in the description


- **I. FRANTA.** Elastomers and Rubber Compounding Materials. Elsevier, 1989, 88-92
- **HOUBEN-WEYL.** Methoden der organischen Chemic [Methods in Organic Chemistry. vol. 14/2, 848
- **M. MORTON ; P. P. SALATIELLO ; H. LANDFIELD.** *J. Polymer Science,* 1952, vol. 8 (2), 215-224
- **P. A. WEERTS ; J. L. M. VAN DER LOOS ; A. L. GERMAN.** *Makromol. Chem.,* 1989, vol. 190, 777-788